## Europäisches Patentamt

## European Patent Office

## Office européen des brevets

(11) Veröffentlichungsnummer: **0 250 938**
**B1**

(12) # EUROPÄISCHE PATENTSCHRIFT

(45) Veröffentlichungstag der Patentschrift:
10.10.90

(51) Int. Cl.⁵: **B29C 45/50**

(21) Anmeldenummer: 87108245.9

(22) Anmeldetag: 06.06.87

(54) Antriebseinrichtung für eine Schneckenspritzgiessmaschine.

(30) Priorität: 26.06.86 DE 3621463

(43) Veröffentlichungstag der Anmeldung:
07.01.88 Patentblatt 88/1

(45) Bekanntmachung des Hinweises auf die Patenterteilung:
10.10.90 Patentblatt 90/41

(84) Benannte Vertragsstaaten:
AT FR GB IT

(56) Entgegenhaltungen:
DE-A- 2 651 988
FR-A- 2 152 953
FR-A- 2 256 822

(73) Patentinhaber: Krauss-Maffei Aktiengesellschaft,
Krauss-Maffei-Strasse 2, D-8000 München 50(DE)

(72) Erfinder: Wohlrab, Walter, Birkenweg 9,
D-8832 Weissenburg(DE)

ACTORUM AG

## Beschreibung

Die Erfindung bezieht sich auf eine Antriebseinrichtung für eine Schneckenspritzgießmaschine gemäß dem Oberbegriff des Patentanspruchs 1. Eine Antriebseinrichtung dieser Art ist aus der FR-A 2 256 822 bekannt.

Die aus der FR-A 2 256 822 bekannte Antriebseinrichtung für eine Schneckenspritzgießmaschine weist einen mit der Extruderschnecke starr verbundenen Antriebskolben auf, welcher axial verschieblich und drehbar in einem ortsfesten Gehäuse gelagert ist. In den Antriebskolben ist eine axial festgelegte Antriebswelle eines elektrischen oder hydraulischen Motors eingesetzt und über eine Vielkeilverzahnung mit dem Antriebskolben drehfest und achsverschieblich verbunden. Zur axialen Verschiebung des Antriebskolbens beim Spritzhub der Extruderschnecke werden sowohl die die Antriebswelle umgebende Stirnfläche am motorseitigen Ende des Antriebskolbens als auch die Stirnfläche eines Verbindungszapfens zwischen Antriebskolben und Extruderschnecke mit Hydraulikdrucken beaufschlagt, wobei die Hydraulikflüssigkeit durch eine Längsbohrung der Antriebswelle bis zu dem erwähnten Verbindungszapfen geführt wird. Bei dem Dosiervorgang der Schneckenspritzgießmaschine, bei welchem nur ein relativ geringer Axialdruck auf die Extruderschnecke bei deren Rotation benötigt wird, genügt es, nur die Stirnfläche am motorseitigen Ende des Antriebskolbens mit Hydraulikdruck zu beaufschlagen. Bei dem Injektionsvorgang, bei welchem die Extruderschnecke mit oder ohne Rotation einen Druckhub ausführt, steht denoch die gesamte, aus den beiden Teilflächen gebildete Querschnittsfläche des Antriebskolbens zur Verfügung. Es läßt sich also durch entsprechende Ansteuerung der verschiedenen Teilflächen eine Änderung der Druckbeaufschlagung der Extruderschnecke praktisch ohne größere Änderung des Drucks der Hydraulikflüssigkeit erzielen. Diesem Vorteil steht allerdings bei größeren Kolbendurchmessern, z.B. ab etwa 300 mm Durchmesser, der Nachteil gegenüber, daß die Lager für den Antriebskolben, welche sowohl für die Schneckenrotation als auch für die Axialverschiebung beim Spritzhub ausgelegt sein müssen, hohem Umfangsgeschwindigkeiten ausgesetzt sind, was entweder zur Überdimensionierung und damit zu erhöhtem Aufwand zwingt oder zu starkem Verschleiß führt.

Die Aufgabe der Erfindung besteht demgegenüber darin, bei einer Antriebseinrichtung der eingangs erwähnten Art unter Beibehaltung des Vorteils einer abgestuften Axialdrucksteuerung die Umfangsgeschwindigkeiten der Drehdichtungen für den Antriebskolben und damit deren Verschleiß zu verringern.

Diese Aufgabe wird erfindungsgemäß durch die kennzeichnenden Merkmale des Patentanspruchs 1 gelöst.

Vorteilhafte Weiterbildungen und Ausgestaltungen der Antriebseinrichtung nach Anspruch 1 ergeben sich aus den Unteransprüchen 2 bis 4.

Bei der erfindungsgemäßen Antriebseinrichtung ist im Vergleich zum eingangs angeführten Stand der Technik der Antriebskolben mit einem wesentlich kleineren Durchmesser ausgeführt, da insbesondere bei großkalibrigen Antriebseinrichtungen die zulässige Torsionsbelastung von Kolben mit kleineren Durchmessern ausreicht, um auf die Extruderschnecke das erforderliche Antriebsmoment zu übertragen.

Der den Antriebskolben umgebende und nur in Axialrichtung bewegliche Antriebszylinder wird wegen seines größeren Durchmessers und damit seiner größeren Druckfläche in der Regel nur beim Spritzhub der Extruderschnecke hydraulisch angesteuert, wobei sich hier die Axialdrucke von Antriebskolben und Antriebszylinder summieren. Bei dem Dosiervorgang reicht es dagegen aus, nur den Antriebskolben mit seiner kleineren Druckfläche hydraulisch anzusteuern und den Antriebszylinder unbeaufschlagt zu lassen, welcher nur bei einer Verschiebung in Axialrichtung mit dem Antriebskolben gekoppelt ist, jedoch gegenüber dessen Rotationsbewegung entkoppelt ist. Auf diese Weise brauchen die auf Rotation beanspruchten Dichtungen der erfindungsgemäßen Antriebseinrichtung nur für wesentlich geringere Umfangsgeschwindigkeiten ausgelegt zu werden, was gleichzeitig einem verringerten Verschleiß entspricht. Da sich Antriebskolben und Antriebszylinder nach wie vor unabhängig voneinander mit Hydraulikflüssigkeit ansteuern lassen, ist der eingangs geschilderte Vorteil einer abgestuften Axialdrucksteuerung bei den unterschiedlichen Arbeitszuständen der Spritzgießmaschine auch bei der erfindungsgemäßen Antriebseinrichtung vorhanden. Zum Rückhub wird wie beim Stand der Tecknik nur der Antriebszylinder über eine entsprechende Ringfläche angesteuert. In allen Betriebszuständen der Spritzgießmaschine braucht der Druck der Hydraulikflüssigkeit praktisch nicht verändert zu werden, was die Einstellung eines für eine feinfühlige Regelung geeigneten Flüssigkeitsdrucks erlaubt.

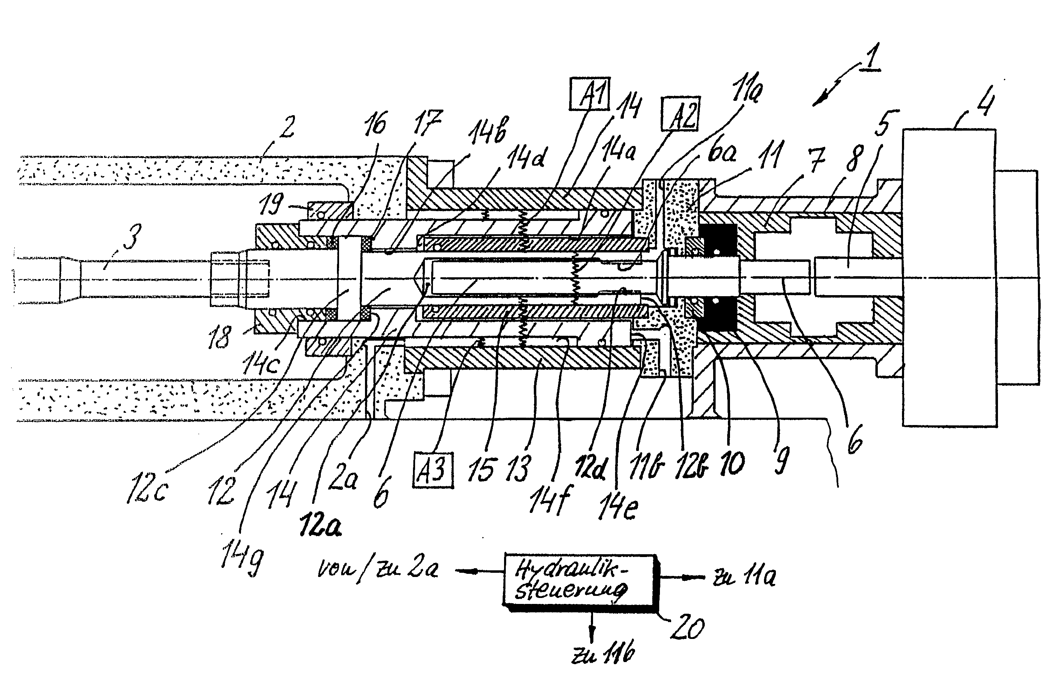

Die Erfindung wird nachfolgend an Hand der Zeichnung näher erläutert, welche einen schematische Schnittansicht einer erfindungsgemäßen Antriebseinrichtung zeigt.

In der Figur ist mit 1 die Antriebseinrichtung einer Schneckenspritzgießmaschine bezeichnet, von welcher nur der Schneckenzylinder 2 und die Extruderschnecke 3 teilweise dargestellt sind. Zum Drehantrieb der Extruderschnecke 3 ist ein elektrischer oder hydraulischer Motor 4 vorgesehen, welcher Teil der Antriebseinrichtung 1 ist. An dem nicht dargestellten Ende der Extruderschnecke 3 befindet sich der kegelige Schneckenkopf, welcher gegen das ebenfalls kegelige Ende des Schneckenzylinders axial bewegbar ist, um das plastifizierte Kunststoffgranulat durch eine dünne Öffnung im Schneckenzylinder in eine dahin angebrachte Gießform zu spritzen. Dieser Spritzhub erfordert einen sehr hohen Druck der Extruderschnecke 3 in Axialrichtung, wobei die Schnecke 3 während des Spritzhubs zusätzlich rotiert werden kann. Bei der vorausgehenden Plastifizierung des aufgegebenen Kunststoffgranulats, dem sogenannten Dosiervorgang, braucht die Schnecke 3 nur mäßig in axialer Richtung belastet zu werden, um den Gegendruck des plastifizierten Kunststoffs, der sich am Schneckenkopf ansammelt, entgegenzuwirken.

Der Antriebsmotor 4 ist mit seiner Antriebswelle 5 über eine hydraulische Kupplung mit einer drehbar gelagerten Antriebswelle 6 gekoppelt. Die hydraulische Kupplung ist mit einem Druckgehäuse 7 angedeutet, welches in einem Lagerbock 8 befestigt ist, an welchem auch der Motor 4 angeflanscht ist. Die Enden der Antriebswelle 5 und der Antriebswelle 6 stehen sich bei axialer Ausrichtung unter geringem Abstand gegenüber.

Der motorseitige Endabschnitt der Antriebswelle 6 ist in Drehlagern 9 und 10 axial festgelegt, wobei die Drehlager 9, 10 nicht näher bezeichnete Drehdichtungen an ihren Lagerflächen aufweisen. Das Drehlager 9 ist in eine Ausnehmung des Druckgehäuses 7 eingesetzt, während das Drehlager 10 zum größeren Teil in die rückseitige Stirnfläche eines am Lagerbock 8 befestigten Lagerschildes 11 und zum kleineren Teil in die vordere Stirnfläche des Drehlagers 9 eingepaßt ist. Im Durchführungsbereich durch das Lagerschild 11 weist die Antriebswelle 6 einen Bund auf, welcher nach rückwärts zum Motor 4 hin gerichtete Kräfte auf das Lagerschild 11 übertägt.

Mit ihrem schneckenseitigen Endabschnitt ist die Antriebswelle 6 in eine Sackbohrung 12a eines Antriebskolbens 12 eingesetzt, wobei für eine drehfeste und gleichzeitig achsverschieblich Verbindung zwischen den Teilen 6 und 12 eine Vielkeilverzahnung, bestehend aus kolbenseitigen Längsnuten 12d und wellenseitigen Zahnleistung 6a, vorgesehen ist. Die motorseitige, ringförmige Stirnfläche 12b des Antriebskolbens 12 steht über einen Kanal 11a in dem Lagerschild 11 mit einer nur schematisch als Block angedeuteten Hydrauliksteuerung 20 in hydraulischer Verbindung. Da ferner die erwähnten Vielkeilverzahnung 6a, 12d flüssigkeitsdurchlässig ist, steht auch die Bodenfläche der Sackbohrung 12a mit dem Kanal 11a in hydraulischer Verbindung, so daß die gesamte, aus den zwei erwähnten Teilflächen bestehende Querschnittsfläche A2 des Antriebskolbens 12 vom Hydraulikdruck beaufschlagt werden kann.

Längs des mit der Sackbohrung 11a versehenen Längsabschnitts des Antriebskolbens 11 erstreckt sich ein Lagerrohr 15, dessen gesamte Innenfläche ein Gleitlager für die Außenfläche des Antriebskolbens 12 darstellt.

Das motorseitige Ende des Lagerrohrs 15 ist an dem Lagerschild 11 befestigt. Im Bereich des entgegengesetzten Endes des Lagerrohrs 15 trägt dessen Innenfläche einen Dichtring, welcher in radialer und in axialer Richtung beansprucht wird.

Zur Extruderschnecke 3 hin weist der Antriebskolben 12 einen Bund 12c auf, welcher in noch näher zu beschreibender Weise mit einem Antriebszylinder 14 verbunde ist.

Der Antriebszylinder 14 umgibt das Lagerrohr 15, das in eine erste Axialbohrung 14a des Antriebszylinders 14 von dessen motorseitigem Ende her eingesetzt ist. Dabei besteht zwischen der Innenfläche der Axialbohrung 14a und der Außenfläche des Lagerrohrs 15 ein ausreichendes Spiel, damit Hydraulikflüssigkeit von einem Kanal 11b im Lagerschild 11 über die angrenzende, ringförmige Stirnfläche 14e des Antriebszylinders 14 eindringen und zu einer ringförmigen Stufenfläche 14d gelangen kann. Die ringförmige Stufenfläche 14d wird durch den Durchmesserunterschied zwischen der ersten Axialbohrung 14a und einer sich daran anschließenden zweiten Axialbohrung 14b gebildet.

Der Hydraulikdruck beaufschlagt somit die aus der ringförmigen Stirnfläche 14e und der ringförmigen Stufenfläche 14d gebildete Querschnittsfläche A1. Die Innenfläche der zweiten Axialbohrung 14b bildet eine weitere Gleitfläche für die Außenfläche des Antriebskolbens 12.

An die kleinkalibrigere zweite Axialbohrung 14b schließ sich eine wieder größerkalibrige dritte Axialbohrung 14c an, welche bis zu dem schneckenförmigen Ende des Antriebszylinders 14 verläuft und den Bund 12 c aufnimmt.

Die dritte Axialbohrung ist mit einem Lagerdeckel 18 abgeschlossen, welcher zwei Dichtringe für das den Lagerdeckel 18 durchsetzende Ende des Antriebskolbens 12 an seiner Innenbohrung aufweist. In das genannte Ende des Antriebskolbens 12 ist das Ende der Extruderschnecke 3 unverdreh- und verschiebbar eingesetzt. Zwischen dem Bund 12c und dem Lagerdeckel 18 befindet sich ein Axiallager 16, während sich ein weiteres Axiallager 17 zwischen dem Bund und der Ringschulter 14g befindet, welches am Übergang zwischen der zweiten und dritten Axialbohrung 14b und 14c vorhanden ist. Infolge der Einspannung des Bunds 14c zwischen die Axiallagern 16, 17 und dem Lagerdeckel 18 wird die vorstehend bereits erwähnten axiale Verbindung zwischen dem Antriebskolben 12 und dem Antriebszylinder 14 erziehlt. Dagegen kann sich der Antriebskolben 12 bezüglich des Antriebszylinders 14 frei drehen, da der Antriebszylinder 14 nur in Axialrichtung, nicht dagegen in Radialrichtung beweglich gelagert ist.

Die axial verschiebliche Lagerung des Antriebszylinders 14 erfolgt einerseits an einem Lagerzylinder 13, dessen motorseitiges Ende an dem Lagerschild 11 und dessen schneckenseitiges Ende an dem Schneckenzylinder 2 befestigt sind. Ferner ist der Antriebszylinder 14 durch die Stirnwand des Schneckenzylinders 2 bündig anliegend hindurchgeführt, wobei ein unmittelbar anschließen an dieser Stirnwand gelagertes Radiallager 19 auf die Außenfläche des Antriebszylinder 14 aufgesetzt ist. Über diese Stirnwand wird durch einen Kanal 2a Hydraulikflüssigkeit in eine Kammer geleitet, die durch eine Abstufung 14f der Außenfläche des Antriebszylinders 14 gebildet wird, und eine Querschnittsfläche A3 aufweist.

Die zur Dichtung des Antriebszylinders 14 vorgesehenen großen Dichtringe befinden sich in dem Abschnitt zwischen der motorseitigen Stirnfläche 14e und der Abstufung 14f sowie an der Innenfläche des Radiallagers 19. Diese großkalibrigen Dichtringe brauchen keine Drehbelastung aufzunehmen und werden deshalb nicht mit hohem Umfangsgeschwindigkeiten abgenutzt. Die in Rotationsrichtung belasteten Dichtringe befinden sich zwischen Lagerrohr 15 und Antriebskolben 12 sowie zwischen Lagerdeckel 18 und Antriebskolben 12. Wegen des geringeren Durchmessers des Antriebskolbens 12 im Vergleich zum Antriebszylinder 14 sind jedoch die Umfangsgeschwindigkeiten an diesen letztgenannten Dichtringen wesentlich kleiner als beim Stand der Technik, wo der Antriebskolben den Durchmesser des erfindungsgemäß vorgesehenen Antriebszylinders 14 besitzt.

Die bei der Beaufschlagung mit Hydraulikflüssigkeit wirksamen Querschnittsflächen A1, A2 und A3 sind in der Figur mit zickzackförmigen Linie und angedeutet. Man erkennt, daß während der Dosierphase der Spritzgießmaschine nur die Fläche A2 über den Kanal 11a angesteuert wird, wobei gleichzeitig der Antriebskolben 12 über den Motor 4 rotiert wird. Während der Injektionsphase der Spritzgießmaschine werden beiden Teilflächen A1 und A2 über die Kanäle 11a, 11b mit Hydraulikflüssigkeit beaufschlagt, wobei die Summe beider Teilfläche A1, A2 wirksam hinsichtlich des Axialdrucks ist. Zum Rückhub der Extruderschnecke 3 wird die Teilfläche A3 über den Kanal 2a mit Hydraulikflüssigkeit angesteuert. Wie schon erwähnt, erlaubt diese Teilflächensteuerung eine sehr genaue Regelung der in Axialrichtung der Extruderschnecke aufzubringenden Kräfte.

Es versteht sich, daß die erfindungsgemäße Antriebseinrichtung nicht nur für Schnecken geeignet ist, sondern auch für solche Maschinenelemente, welche sowohl gedreht als auch axial verschoben werden müssen.

**Patentansprüche**

1. Antriebseinrichtung für eine Schneckenspritzgießmaschine, mit
— einem Antriebsmotor (4), dessen Drehmoment auf eine axial festgelegte Antriebswelle (6) übertragbar ist,
— einem axial und radial beweglich gelagerten Antriebskolben (12), welcher an seinem einen Ende eine Sackbohrung (12a) aufweist, in welchem die Antriebswelle (6) eingesetzt ist, und welcher an seinem anderen Ende an einer Extruderschnecke (3) starr befestigt ist, wobei der Antriebskolben (12) im Bereich der Sackbohrung (12a) über eine Vielkeilverzahnung (6a) mit der Antriebswelle (6) drehfest und achsverschieblich verbunden ist,
— einem konzentrisch zu dem Antriebskolben (12) axial beweglich und radial fest gelagerten Antriebszylinder (14), welcher mit dem Antriebskolben (12) bzw. der Extruderschnecke (3) in Achsrichtung gekoppelt ist, und
— einer Hydrauliksteuerung (20), mittels welcher zum axialen Verschieben der Extruderschnecke (3) bei deren Spritzhub der Antriebszylinder (14) mit einem ersten Hydraulikdruck (Querschnittsfläche A1) und zum Rücksetzen der Extruderschnecke (3) der Antriebskolben (12) mit einem zweiten Hydraulikdruck (Querschnittsfläche A3) beaufschlagbar sind, dadurch gekennzeichnet, daß eine Bodenfläche der Sackbohrung (12a) des Antriebskolbens (12) über die Vielkeilverzahnung (6a) hydraulisch mit der die Sackbohrung (12a) stirnseitig umgebenden Ringfläche (12b) des Antriebskolbens (12) in Verbindung steht und zusammen mit dieser Ringfläche (12b) von der Hydrauliksteuerung (20) mit einem dritten Hydraulikdruck (Querschnittsfläche A2) zum axialen Verschieben der Extruderschnecke (3) bei deren Spritzhub beaufschlagbar ist, und zwar gleichzeitig mit dem Anlegen des ersten Hydraulikdrucks (Querschnittsfläche A1) an den Antriebszylinder (14), wohingegen bei der Rotation der Extruderschnecke (3) nur der dritte Hydraulikdruck (Querschnittsfläche A2) von der Hydrauliksteuerung (20) angelegt wird.

2. Antriebseinrichtung nach Anspruch 1, dadurch gekennzeichnet, daß der Antriebskolben (12) über seinem mit der Sackbohrung (12a) versehenen Längsabschnitt in einem Lagerrohr (15) axial und radial beweglich gelagert ist, daß das Lagerrohr (15) an seiner einen Stirnseite an einem ortsfesten Lagerschild (11) befestigt ist und an einer ersten Axialbohrung (14a) des Antriebszylinders (14) eingesetzt ist und daß eine zwischen der ersten Axialbohrung (14a) und einer zweiten, nur von dem Antriebskolben (12) durchsetzten Axialbohrung (14b) des Antriebszylinders (14) gebildete ringförmige Stufenfläche (14d) hydraulisch mit der die erste Axialbohrung (14a) umgebende Ringfläche (14e) des Antriebszylinders (14) in Verbindung steht und zusammen mit dieser Ringfläche (14e) von der Hydrauliksteuerung (20) mit dem zweiten Hydraulikdruck beaufschlagt wird.

3. Antriebseinrichtung nach Anspruch 1 oder 2, dadurch gekennzeichnet, daß der Antriebszylinder (14) an seiner Außenumfangsfläche eine Abstufung (14f) aufweist, welche von der Hydrauliksteuerung (20) mit dem dritten Hydraulikdruck beaufschlagt wird.

4. Antriebseinrichtung nach einem der Ansprüche 1 bis 3, dadurch gekennzeichnet, daß der Antriebskolben (12) an seinem schneckenseitigen Endabschnitt einen Bund (12c) aufweist, welcher in eine dritte Axialbohrung (14c) des Antriebszylinders (14) eingesetzt ist und daß zwischen dem Bund und einer von der zweiten und dritten Axialbohrung (14b, 14c) des Antriebszylinders (14) gebildeten Ringschulter (14g) einerseits sowie zwischen dem Bund (12c) und einem die dritte Axialbohrung (14c) endseitig abschließenden Lagerdeckel (18) andererseits Axiallager (16, 17) angebracht sind.

**Claims**

1. A drive device for a screw injection moulding machine with
— a drive motor 4, the torque of which can be transmitted to an axially fixed drive shaft (6),
— an axially and radially movably mounted drive piston (12) comprising at one end a blind bore (12a) into which the drive shaft (6) is inserted and which is at its other end rigidly fixed to an extruder worm (3), the drive piston (12) being in the region of the blind bore (12a) connected to the drive shaft (6) in rotatable and axially displaceable manner via a multi-spline tooth system (6a),

– a drive cylinder (14) adapted for axial movement concentrically of the drive piston (12) and which is radially rigidly mounted, being coupled to the drive piston (12) or the extruder screw (3) in an axial direction and

– a hydraulic control arrangement (20) by means of which for axial displacement of the extruder screw (3) during its injection stroke the drive cylinder (14) can be exposed to a first hydraulic pressure (cross-sectional area A1) and for restoring the extruder worm (3) the drive piston (12) can be subjected to a second hydraulic pressure (cross-sectional area A3), characterised in that a bottom surface of the blind bore (12a) of the drive piston (12) is, via the multi-spline tooth arrangement (6a) hydraulically connected to the annular face (12b) of the drive piston (12) which surrounds the end of the blind bore (12a) being, together with this annular surface (12b) subject to the application by the hydraulic control means (20) to a third hydraulic pressure (cross-sectional area A2) for axial displacement of the extruder screw (3) during its injection stroke and in fact simultaneously with application of the first hydraulic pressure (cross-sectional area A1l) to the drive cylinder (14) whereas upon rotation of the extruder worm (3) only the third hydraulic pressure (cross-sectional area A2) is applied by the hydraulic control means (20).

2. A drive device according to Claim 1, characterised in that via its longitudinal portion which is provided with the blind bore (12a), the drive piston (12) is mounted to be axially and radially movable in a bearing tube (15) and in that the bearing tube (15) is at one end fixed to a rigid bearing plate (11) and is inserted into a first axial bore (14a) of the drive cylinder (14) and in that an annular stepped surface (14d) formed between the first axial bore (14a) and a second axial bore (14b) of the drive cylinder (14) through which only the drive piston (12) passes is hydraulically connected to the annular surface (14e) of the drive cylinder (14) which encloses the first axial bore (14a) and, together with this annular face (14e), is subjected to the second hydraulic pressure by the hydraulic control means (20).

3. A drive device according to Claim 1 or 2, characterised in that the drive cylinder (14) has on its outer peripheral surface a stepped arrangement (14b) which is exposed to the third hydraulic pressure by the hydraulic control means (20)

4. A drive device according to one of Claims 1 to 3, characterised in that the drive piston (12) has at its end portion which is towards the screw a collar (12c) which is inserted into a third axial bore (14c) of the drive cylinder (14) and in that between the collar and an annular shoulder (14g) formed by the second and third axial bore (14b, 14c) of the drive cylinder (14) at one end and between the collar (12c) and a bearing cover (18) closing off the end of the third axial bore (14c) on the other, there are axial bearings (16, 17).

## Revendications

1. Dispositif d'entraînement pour presse d'injection à vis, comprenant

- un moteur (4) d'entraînement, dont le couple de rotation peut être transmis à un arbre (6) d'entraînement fixé axialement ;

- un piston (12) d'entraînement mobile axialement et radialement, qui comporte à l'une de ses extrémités un alésage borgne (12a) dans lequel cet arbre (6) d'entraînement est monté et dont l'autre extrémité est rendue solidaire d'une vis (3) d'extrusion, ce piston (12) étant rendu solidaire en rotation dudit arbre (6) d'entraînement, dans sa partie percée de l'alésage borgne (12a), tout en pouvant coulisser axialement grâce à une liaison par dents et cannelures (6a) avec cet arbre (6) ;

- un cylindre (14) d'entraînement, concentrique au piston (12), pouvant coulisser axialement et immobilisé en rotation, qui est jumelé dans le sens axial avec ce piston (12) ou avec la vis (3) d'extrusion ;

- un circuit hydraulique (20) de commande, au moyen duquel une première poussée hydraulique (sur une surface transversale A1) peut être appliquée sur le cylindre (14) d'entraînement, de façon à déplacer axialement la vis (3) d'extrusion dans sa course d'injection et une seconde poussée hydraulique (sur une surface transversale A3) peut être appliquée sur le piston (12) pour faire reculer cette vis (3), dispositif caractérisé en ce que la surface du fond de l'alésage borgne (12a) du piston (12) d'entraînement communique hydrauliquement, par l'intermédiaire des cannelures (6a), avec la surface annulaire (12b) entourant l'orifice de cet alésage (12a) et peut être soumise, avec cette surface annulaire (12b) à une troisième poussée hydraulique (sur une surface transversale A2) afin de déplacer axialement la vis (3) d'extrusion dans sa course d'injection, c'est-à-dire en même temps que la première poussée hydraulique (sur la surface transversale A1) est appliquée au cylindre (14) d'entraînement, tandis que pendant que cette vis (3) d'extrusion tourne, le circuit hydraulique (20) n'applique que la troisième poussée hydraulique (sur la surface transversale A2).

2. Dispositif d'entraînement selon la revendication 1, caractérisé en ce que la partie de la longueur du piston (12) d'entraînement, qui est percée de l'alésage borgne (12a), est logée de manière à pouvoir tourner et coulisser dans un coussinet tubulaire (15) ; en ce que ce coussinet (15) est fixé par l'une de ses extrémités frontales à un flasque fixe (11) et inséré dans un premier alésage axial (14a) du cylindre (14) d'entraînement ; et en ce qu'un épaulement annulaire (14d), formé entre ce premier alésage axial (14a) et un second (14b), dans lequel ne passe que le piston (12) d'entraînement, communique hydrauliquement avec la face annulaire (14e) de ce cylindre (14) entourant l'orifice de ce premier alésage axial (14a) et est soumis, par le circuit hydraulique (20) de commande, avec cette face annulaire (14e), à la première poussée hydraulique.

3. Dispositif d'entraînement selon la revendication 1 ou 2, caractérisé en ce que le cylindre (14) d'entraînement, présente sur sa périphérie un décrochement (14f), que le circuit hydraulique (20) de commande soumet à la seconde poussée hydraulique.

4. Dispositif d'entraînement selon l'une des revendications 1 à 3, caractérisé en ce que le piston (12) d'entraînement comporte, à son extrémité adjacente à la vis d'extrusion, un collet (12c), qui est disposé dans un troisième alésage axial (14c) du cylindre (14) d'entraînement ; et en ce que des paliers de butée (16, 17) sont montés, d'une part entre ce collet et un épaulement annulaire (14g) formé par les second et troisième alésages (14b, 14c) de ce cylindre (14) et d'autre part entre ledit collet (12c) et un chapeau (18) de palier, qui obture l'extrémité du troisième alésage axial (14c).